(19) Europäisches Patentamt
European Patent Office
Office européen des brevets

(11) EP 1 131 362 B1

(12) **EUROPÄISCHE PATENTSCHRIFT**

(45) Veröffentlichungstag und Bekanntmachung des Hinweises auf die Patenterteilung:
**22.06.2005 Patentblatt 2005/25**

(21) Anmeldenummer: **99950773.4**

(22) Anmeldetag: **22.10.1999**

(51) Int Cl.[7]: **C08F 20/26**, C09D 4/00, C09J 4/00, C09D 157/04, C09J 157/04

(86) Internationale Anmeldenummer:
**PCT/EP1999/008037**

(87) Internationale Veröffentlichungsnummer:
**WO 2000/026264 (11.05.2000 Gazette 2000/19)**

(54) **DIE VERWENDUNG VON METHYLPROPAN-1,3-DIOL-MONO(METH)ACRYLAT FÜR DIE HERSTELLUNG OXIDATIV UND/ODER THERMISCH HÄRTBARER BESCHICHTUNGSMITTEL, KLEBSTOFFE UND DICHTUNGSMASSEN**

USE OF METHYLPROPANE-1,3-DIOL-MONO(METH)ACRYLATE FOR PRODUCING COATING MATERIALS, ADHESIVES AND SEALING MATERIALS WHICH CAN BE HARDENED OXIDATIVELY AND/OR THERMALLY

UTILISATION DE METHYLPROPANE-1,3-DIOL-MONO(METH)ACRYLATE POUR LA PRODUCTION D'AGENTS DE REVETEMENT, DE COLLES ET DE MATERIAUX D'ETANCHEITE DURCISSABLES PAR VOIE OXYDATIVE ET/OU THERMIQUE

(84) Benannte Vertragsstaaten:
**DE ES FR IT**

(30) Priorität: **31.10.1998 DE 19850210**

(43) Veröffentlichungstag der Anmeldung:
**12.09.2001 Patentblatt 2001/37**

(73) Patentinhaber: **BASF Coatings Aktiengesellschaft
48165 Münster (DE)**

(72) Erfinder:
- **BAUMGART, Hubert
D-48163 Münster (DE)**
- **RINK, Heinz-Peter
D-48153 Münster (DE)**
- **RÖCKRATH, Ulrike
D-48308 Senden (DE)**
- **LÖCKEN, Wilma
D-45721 Haltern (DE)**

(74) Vertreter: **Fitzner, Uwe, Dr.
Dres. Fitzner & Münch
Rechts- und Patentanwälte
Lintorfer Strasse 10
40878 Ratingen (DE)**

(56) Entgegenhaltungen:
**DE-A- 3 234 045**

EP 1 131 362 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft die neuartige Verwendung von Methylpropan-1,3-diol-mono(meth)acrylat für die Herstellung oxidativ und/oder thermisch härtbarer Beschichtungsmittel, Klebstoffe und Dichtungsmassen. Außerdem betrifft die vorliegende Erfindung neue Beschichtungsmittel, Klebstoffe und Dichtungsmassen, insbesondere neue Beschichtungsmittel, welche Homo-und/oder Copolymerisate von Methylpropan-1,3-diol-mono(meth)acrylat, insbesondere als Bindemittel, enthalten. Desweiteren betrifft die vorliegende Erfindung neue kratzfeste Beschichtungen, Klebschichten und Dichtungen, insbesondere aber kratzfeste Beschichtungen für den Automobilsektor.

In den vergangenen Jahren wurden bei der Entwicklung säure- und etchbeständiger Klarlacke für die Automobilserienlackierung große Fortschritte erzielt. In neuerer Zeit besteht nun vermehrt der Wunsch der Automobilindustrie und deren Kunden nach kratzfesten Klarlacken, die gleichzeitig in den übrigen Eigenschaften das bisherige Eigenschaftsniveau beibehalten, wenn nicht gar übertreffen.

Ebenso besteht am Markt der Wunsch nach neuen Klebstoffen und Dichtungsmassen, welche ein verbessertes Eigenschaftsprofil aufweisen.

Aus dem deutschen Patent DE-C-197 09 467 oder der deutschen Offenlegungsschrift DE-A- 197 09 465 sind thermisch härtbare Beschichtungsmittel auf der Basis hydroxylgruppenhaltiger Bindemittel und Vernetzungsmittel, welche mit Hydroxylgruppen reaktive funktionelle Gruppen enthalten, bekannt. Sie weisen nach ihrer Aushärtung ein Speichermodul E' im gummielastischen Bereich von mindestens $10^{7,6}$ Pa und einen Verlustfaktor tan$\delta$ bei 20 °C von maximal 0,10 auf, wobei das Speichermodul E' und der Verlustfaktor mit der Dynamisch-Mechanischen Thermo-Analyse an freien Filmen mit einer Schichtdicke von $40 \pm 10$ µm gemessen worden sind.

Die hieraus hergestellten Beschichtungen, insbesondere die Klarlack und/oder Decklacke für Automobilkarosserien, weisen bereits eine vorzügliche Kratzfestigkeit und Chemikalienbeständigkeit auf. Indes besteht am Markt der Wunsch nach weiteren Alternativen, welche in speziellen Anwendungszwecken, beispielsweise in Kombination mit speziellen Basislacken, den bisher bekannten Beschichtungsmitteln überlegen sind.

Des weiteren ist nicht bekannt, ob sich die bekannten Beschichtungsmittel auch als Klebstoffe oder Dichtungsmassen verwenden lassen.

Methylpropan-1,3-diol-mono(meth)acrylat und seine Polymerisate mit niedrigem Molekulargewicht sind aus der deutschen Patentschrift DE-A-32 34 045 bekannt. Die Polymerisate werden zur Herstellung lichtempfindlicher Zusammensetzung verwendet, welche der bildmäßigen Belichtung dienen. Es ist nicht bekannt, ob sie sich auch für die Herstellung von thermisch und/oder oxidativ härtbaren Beschichtungsmitteln, Klebstoffen oder Dichtungsmassen eignen.

Der vorliegenden Erfindung liegt somit die Aufgabe zugrunde, neue thermisch härtbare Beschichtungsmittel, Klebstoffe und Dichtungsmassen zu finden, welche die Herstellung von kratzfesten Beschichtungen, Klebschichten und Dichtungen ermöglichen. Dabei sollen die neuen Beschichtungsmittel, Klebstoffe und Dichtungsmassen gleichzeitig eine gute Lagerstabilität (mindestens 8 Wochen bei Lagerung bei 50 °C) aufweisen und zu Beschichtungen, Klebschichten und Dichtungen führen, die gleichzeitig zu der hohen Kratzfestigkeit eine hohe Chemikalienbeständigkeit, eine gute Feuchteresistenz und gute Polierbarkeit aufweisen, so daß sie sich zur Verwendung auf dem Möbel-, Industrie- und insbesondere Automobilsektor eignen. Insbesondere die Beschichtungsmittel sollen als Klarlack und/oder Decklack zur Herstellung einer Mehrschichtlackierung, vor allem auf Automobilkarosserien, geeignet sein. Nicht zuletzt sollen die ausgehärteten Beschichtungsmittel eine gute Witterungsbeständigkeit, eine gute Säure/Base-Beständigkeit eine gute Beständigkeit gegenüber Vogelkot u.ä., einen hohen Glanz, ein gutes Appearance sowie eine gute Haftung auf anderen Lackschichten aufweisen.

Des weiteren lag der vorliegenden Erfindung die Aufgabe zugrunde, Methylpropan-1,3-diol-mono(meth)acrylat einer neuen wirtschaftlich und technisch wertvollen Verwendung zuzuführen.

Demgemäß wurden die neuen oxidativ und/oder thermisch härtbaren Beschichtungsmittel, Klebstoffe und Dichtungsmassen gefunden, welche mindestens ein Homopolymerisat (A) von Methylpropan-1,3-diol-mono(meth)acrylat und/oder Copolymerisat (A) von Methylpropan-1,3-diol-mono(meth)acrylat mit mindestens einem weiteren hiermit copolymerisierbaren Monomeren enthalten.

Außerdem wurden die neuen oxidativ und/oder thermisch härtbaren Beschichtungsmittel, Klebstoffen und Dichtungsmassen gefunden, welche

A) mindestens ein Homopolymerisat von Methylpropan-1,3-diol-mono(meth)acrylat und/oder ein Copolymerisat von Methylpropan-1,3-diol-mono(meth)acrylat mit mindestens einem weiteren hiermit copolymerisierbaren Monomeren als Bindemittel und

B) mindestens ein Vernetzungsmittel, welches mit Hydroxylgruppen reaktive funktionelle Gruppen aufweist,

enthalten.

Im folgenden werden diese neuen oxidativ und/oder thermisch härtbaren Beschichtungsmittel, Klebstoffe und Dichtungsmassen der Kürze halber zusammenfassend als "erfindungsgemäße Beschichtungsmittel, Klebstoffe und Dichtungsmassen" bezeichnet.

Desweiteren wurde ein neues Verfahren zur Herstellung von Homopolymerisaten von Methylpropan-1,3-diol-mono(meth)acrylat und/oder von Copolymerisaten von Methylpropan-1,3-diol-mono(meth)acrylat mit mindestens einem weiteren hiermit copolymerisierbaren Monomeren gefunden.

Im folgenden wird dieses neue Verfahren als "erfindungsgemäßes Verfahren" bezeichnet.

Nicht zuletzt wurden die neuen pigmentierten und unpigmentierten Beschichtungen, Klebschichten und Dichtungen gefunden, welche sich mit Hilfe der neuen oxidativ und/oder thermisch härtbaren Beschichtungsmittel. Klebstoffe und Dichtungsmassen herstellen lassen.

Im folgenden werden die neuen pigmentierten und unpigmentierten Beschichtungen, Klebschichten und Dichtungen der Kürze halber als "erfindungsgemäße Beschichtungen, Klebschichten und Dichtungen" bezeichnet.

In Hinblick auf den Stand der Technik war es überraschend und für den Fachmann nicht vorhersehbar, daß die der vorliegenden Erfindung zugrundeliegende Aufgabe mit Hilfe der erfindungsgemäßen Verwendung von Methylpropan-1,3-diol-mono(meth)acrylat gelöst werden konnte.

Der wesentliche Bestandteil der erfindungsgemäßen Beschichtungsmittel, Klebstoffe und Dichtungsmassen sind die erfindungsgemäß zu verwendenden Homopolymerisate und/oder Copolymerisate (A) von Methylpropan-1,3-diol-mono(meth)acrylat, insbesondere die Copolymerisate (A) mit copolymerisierbaren Monomeren.

Als copolymerisierbaren Monomere kommen alle mono- und höherfunktionellen Monomere in Betracht, wie sie auf dem Gebiet der Kunststoffe üblich und bekannt sind. Erfindungsgemäß ist es von Vorteil, monofunktionelle Monomere zu verwenden, um eine unerwünschte Vernetzung oder Gelierung der Copolymerisate bei der Herstellung zu verhindern. In vielen Fällen kann es indes von Vorteil sein, höherfunktionelle Monomere in untergeordneten Mengen mit zu verwenden.

Beispiele geeigneter erfindungsgemäß zu verwendender Monomere sind

A1) Olefine wie Ethylen, Propylen, But-1-en, Pent-1-en, Hex-1-en, Cyclohexen, Cyclopenten, Norbonen, Butadien, Isopren, Cylopentadien oder Dicyclopentadien,

A2) im wesentlichen säuregruppen- und hydroxylgruppenfreie Ester der (Meth)Acrylsäure wie
(Meth)Acrylsäurealkyl- oder cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; oder cycloaliphatische (Meth)acrylsäureester, insbesondere Cyclohexyl-, Isobomyl-, Dicyclopentadienyl-, Octahydro-4,7-methano-1H-inden-methanol- oder tert.-Butylcyclohexyl(meth)acrylat;
(Meth)Acrylsäureoxaalkylester oder -oxacycloalkylester wie Ethyltriglykol(meth)acrylat und Methoxyoligoglykol (meth)acrylat mit einem Molekulargewicht Mn von vorzugsweise 550 oder andere ethoxylierte und/oder propoxylierte hydroxylgruppenfreie (Meth)acrylsäurederivate;
Ethylengylkol-, Propylenglykol-, Diethylenglykol-, Dipropylenglykol-, Butylenglykol-, Pentan-1,5-diol-, Hexan-1,6-diol-, Octahydro-4,7methano-1H-inden-dimethanol- oder Cyclohexan-1,2-, -1,3- oder -1,4-diol-di(meth)acrylat; oder
Trimethylolpropan-di- oder — tri(meth)acrylat oder Pentaerythrit-di-, -tri-oder -tetra(meth)acrylat;

A3) (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- oder N,N-Cyclohexyl-methyl-(meth)acrylsäureamid;

A4) Monomere, die mindestens eine Hydroxylgruppe pro Molekül tragen und im wesentlichen säuregruppenfrei sind wie
Hydroxyalkylester der Acrylsäure, Methacrylsäure oder einer anderen alpha,beta-ethylenisch ungesättigten Carbonsäure, welche sich von einem Alkylenglykol ableiten, das mit der Säure verestert ist, oder durch Umsetzung der Säure mit einem Alkylenoxid erhältlich sind, insbesondere Hydroxyalkylester der Acrylsäure, Methacrylsäure, Ethacrylsäure oder Crotonsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Octahydro-4,7-methano-1H-inden-dimethanol- oder Methylpropandiolmonoacrylat, - monomethacrylat, -monoethacrylat oder -monocrotonat; oder Umsetzungsprodukte aus cyclischen Estern, wie z.B. epsilon-Caprolacton und diesen Hydroxyalkylestern; olefinisch ungesättigte Alkohole wie Allylalkohol oder Polyole wie Trimethylolpropanmono- oder diallylether oder Pentaerythritmono-, -di-oder -triallylether;

A5) mindestens eine Säuregruppe, vorzugsweise eine Carboxyl- Sulfon- oder Phosphonsäuregruppe, pro Molekül tragendes Monomer, insbesondere Acrylsäure, Methacrylsäure, Ethacrylsäure, Crotonsäure, Maleinsäure, Fumarsäure, Itaconsäure, Maleinsäuremono(meth)acryloyloxyethylester, Bernsteinsäuremono(meth)acryloyloxyethylester oder Phthalsäuremono(meth)acryloyloxyethylester;

A6) Epoxidgruppen enthaltende Monomere wie der Glycidylester der Acrylsäure, Methacrylsäure, Ethacrylsäure, Crotonsäure, Maleinsäure, Fumarsäure oder Itaconsäure;

A7) vinylaromatische Kohlenwasserstoffe, wie Styrol, alpha-Alkylstyrole, insbesondere alpha-Methylstyrol, oder Vinyltoluol;

A8) Nitrile wie Acrylnitril oder Methacrylnitril;

A9) Umsetzungsprodukte der vorstehend beschriebenen Monomere (A5) mit dem Glycidylester einer in alpha-Stellung verzweigten Monocarbonsäure mit 5 bis 18 C-Atomen je Molekül, insbesondere das Umsetzungsprodukt von Acryl- und/oder Methacrylsäure mit dem Glycidylester der Versaticsäure;

A10) Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether oder Vinylcyclohexylether; Vinylester wie Vinylacetat, Vinylpropionat, Vinylbutyrat, Vinylpivalat oder der Vinylester der 2-Methyl-2-ethylheptansäure oder Vinylester von in alpha-Stellung verzweigten Monocarbonsäuren mit 5 bis 18 C-Atomen im Molekül, die erhalten werden durch Umsetzung von Ameisensäure oder Kohlenmonoxid und Wasser in Anwesenheit eines flüssigen, stark sauren Katalysators mit Propylentrimer, Propylentetramer oder Diisobutylen oder mit Olefinen, die Crack-Produkte von paraffinischen Kohlenwasserstoffen wie Mineralölfraktionen sind und sowohl verzweigte oder geradkettige acyclische und/oder cycloaliphatische Olefine enthalten;

A11) Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A-37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind oder Acryloxysilan-enthaltende Vinylmonomere, herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth) acrylsäure;

Erfindungsgemäß können demnach die Monomeren derart ausgewählt werden, daß bei der Copolymerisation beliebige Copolymerisate resultieren, wie etwa Polyolefine, Polystyrole, Polybutadiene, Polyisoprene, Polyvinylchloride, Polyacrylnitrile, Polyvinylacetate oder Polyacrylate.

Erfindungsgemäß von Vorteil ist es indes, die Monomere derart auszuwählen, daß bei der Copolymerisation Bindemittel (A) für die erfindungsgemäßen Beschichtungsmittel, Klebstoffe oder Dichtungsmassen resultieren. Letztere enthalten außer dem oder den Bindemittel(n) (A) noch mindestens ein Vernetzungsmittel (B), welches mit den Bindemitteln (A) beim Erhitzen ein dreidimensionales duroplastisches Netzwerk aufbaut.

Solche Vernetzungsreaktionen sind auf den Gebieten der Beschichtungsmittel, Klebstoffe und Dichtungsmassen üblich und bekannt und werden beispielsweise in dem Artikel von M. Ooka und H. Ozawa, "Recent developments in crosslinking technology for coating resins", in Progress in Organic Coatings, Band 23, 325 bis 338, 1994 beschrieben. Erfindungsgemäß ist die Vernetzungsreaktion zwischen Hydroxylgruppen und funktionellen Gruppen, welche mit Hydroxylgruppen reagieren können, bevorzugt.

Erfindungsgemäß ist es von Vorteil, die Monomere derart auszuwählen, daß hydroxylgruppenhaltige Polyacrylate resultieren. Diese enthalten neben dem erfindungsgemäß zu verwendenden Methylpropan-1,3-diol-mono(meth)acrylat vorzugsweise die Monomeren (A2).

Darüber hinaus können sie untergeordnete Mengen an Monomeren (A1), (A3) und/oder (A4) bis (A11) einpolymerisiert enthalten. Hierbei ist unter dem Begriff "untergeordnete Menge" ein Anteil an Monomeren zu verstehen, welcher das durch das erfindungsgemäß zu verwendende Methylpropan-1,3-diol-mono(meth)acrylat hervorgerufene vorteilhafte Eigenschaftsprofil nicht nachteilig beeinflußt, sondern in vorteilhafter Weise variiert.

Erfindungsgemäß ist es von ganz besonderem Vorteil, die Monomeren derart auszuwählen, daß hydroxylgruppenhaltige Polyacrylate resultieren, die eine OHZ von 40 bis 240, vorzugsweise 60 bis 210, ganz besonders bevorzugt 100 bis 200, Säurezahlen von 0 bis 80, bevorzugt 0 bis 50, Glasübergangstemperaturen von -35 bis +80 °C, bevorzugt -20 bis +40 °C, und zahlenmittlere Molekulargewichte Mn von 1500 bis 1.000.000, bevorzugt 1500 bis 30.000, ganz besonders bevorzugt 1500 bis 5.000 aufweisen.

Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$1/Tg = \sum_{n=1}^{n=x} Wn/Tg_n; \qquad \sum_n W_n = 1$$

Tg = Glasübergangstemperatur des Polyacrylatharzes
$W_n$ = Gewichtsanteil des n-ten Monomers
$Tg_n$ = Glasübergangstemperatur des Homopolymers aus dem n-ten Monomer
x = Anzahl der verschiedenen Monomeren

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Die erfindungsgemäße (Co)Polymersisation von Methylpropan-1,3-diol-mono(meth)acrylat weist keine methodische Besonderheiten auf, sondern erfolgt mit Hilfe der auf dem Kunststoffgebiet üblichen und bekannten Methoden der kontinuierlichen oder diskontinuierlichen Homo- oder Copolymerisation in Masse, Lösung, Kohlendioxid oder Emulsion unter Normaldruck oder Überdruck in Rührkesseln, Autoklaven, Rohrreaktoren oder Taylorreaktoren.

Beispiele geeigneter (Co)Polymerisationsverfahren werden in den Patentschriften DE-A-197 09 465, DE-C-197 09 476, DE A-28 48 906, DE-A-195 24 182, EP-A-0 554 783, WO 95/27742 oder WO 82/02387 beschrieben.

Erfindungsgemäß sind Taylorreaktoren vorteilhaft und werden deshalb für das erfindungsgemäße Verfahren bevorzugt verwendet.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta. charakterisiert sind. Die Taylor-Zahl ist zusätzlich zur Winkelgeschwindigkeit des Rührers auch noch abhängig von der kinematischen Viskosität v des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i \, r_i \, d \, \nu^{-1} (d/r_i)^{1/2} \qquad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungsystem verhält sich somit wie ein

ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und einem hierin befindlichen konzentrisch oder exzentrisch angeordneten Rotor,einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Als (Co)Polymerisationsinitiatoren werden vorzugsweise freie Radikale bildende Initiatoren eingesetzt. Initiatorenart und -menge werden üblicherweise so gewählt, daß bei der Polymerisationstemperatur während der Zulaufphase ein möglichst konstantes Radikalangebot vorliegt. Als Beispiele für einsetzbare Initiatoren werden genannt: Dialkylperoxide, z.B. Di-tert.-Butylperoxid und Dicumylperoxid, Hydroperoxide, z.B. Cumolhydroperoxid und tert.-Butylhydroperoxid, Perester, z.B. tert.-Butylperbenzoat, tert.-Butylperpivalat, tert.-Butylper-3,5,5-trimethylhexanoat und tert.-Butylper-2-ethylhexanoat, oder Bisazoverbindungen wie Azobisiobutyronitril.

Die Polymerisationsbedingungen (Reaktionstemperatur, Zulaufzeit der Monomerenmischung und Polymerisationsinitiatoren, evt. Mitverwendung von Molekulargewichtsreglern, z.B. Mercaptane, Thioglykolsäureester, alpha-Diphenylethen, Nitroxylradikalgruppen enthaltende Verbindungen oder Chlorwasserstoff) werden so ausgewählt, daß insbesondere die erfindungsgemäß mit besonderem Vorzug hergestellten und verwendeten Polyacrylate ein zahlenmittleres Molekulargewicht wie vorstehend angegeben (bestimmt durch Gelpermeationschromatographie unter Verwendung von Polystyrol als Eichsubstanz) aufweisen. Die Säurezahl kann vom Fachmann durch Einsatz entsprechender Mengen der Komponente (A5) eingestellt werden. Analoges gilt für die Einstellung der Hydroxylzahl und der Epoxidzahl; sie sind über die Menge an eingesetzter Komponente (A4) bzw. (A6) steuerbar.

Für das erfindungsgemäße Verfahren ist es von Vorteil, die (Co)Polymerisation in hydroxylgruppenhaltigen Reaktiverdünnem für thermisch härtbare Beschichtungsmittel, Klebstoffe und Dichtungsmassen durchzuführen.

Erfindungsgemäß kommen alle Reaktiverdünner als Reaktionsmedium in Betracht, welche bei den bekannten Vernetzungsreaktionen zwischen den Hydroxylgruppen und den mit Hydroxylgruppen reaktiven funktionellen Gruppen des Vemetzunasmittels (B) in das Bindemittel (A) eingebaut werden und welche die Homo- oder Copolymerisation von Methylpropan-1,3-diol-mono(meth)acrylat nicht be- oder gar verhindern. Der Fachmann kann daher die jeweils geeigneten Reaktiverdünner mit Hilfe seines allgemeinen Fachwissens, gegebenenfalls unter Zuhilfenahme einfacher Vorversuche, auswählen.

Beispiele geeigneter erfindungsgemäß zu verwendender Reaktiverdünner sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht Mw von 600 bis 1100 auf;

Weitere Beispiele geeigneter erfindungsgemäß zu verwendender Polyole sind verzweigte, cyclische und/oder acyclische $C_9$-$C_{16}$-Alkane, die mit mindestens zwei Hydroxylgruppen funktionalisiert sind, insbesondere Diethyloctandiole.

Weitere Beispiele geeigneter erfindungsgemäß zu verwendender Polyole sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bis-hydroxymethyl-butandiol-(1,4) (Homopentaerythrit). Die Herstellung dieser Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses. Perspectives", VCH, Weinheim, New York, 1996, beschrieben.

Die erfindungsgemäßen Beschichtungsmittel, Klebstoffe und Dichtungsmassen können neben den erfindungsgemäß zu verwendenden Bindemitteln (A) untergeordnete Mengen weiter Homo- oder Copolymerisate enthalten. Im Rahmen der vorliegenden Erfindung weist der Begriff "untergeordneten Mengen" darauf hin, daß nur solche Anteile verwendet werden sollen, welche das vorteilhafte Eigenschaftsprofil der erfindungsgemäßen Beschichtungsmittel. Klebstoffe und Dichtungsmassen, das durch die erfindungsgemäß zu verwendenden Bindemitteln (A) hervorgerufen wird, nicht nachteilig verändern, sondern in vorteilhafter Weise variieren oder weiter verbessern.

Beispiele geeigneter Homo- oder Copolymerisate, welche den erfindungsgemäßen Beschichtungsmittel, Klebstoffe und Dichtungsmassen zugesetzt werden können, sind übliche und bekannte Polyacrylate, Polyester, Polyurethane, acrylierte Polyurethane, acrylierte Polyester, Polylactone, Polycarbonate, Polyether oder (Meth)Acrylatdiole.

Geeignete Polyacrylate werden beispielsweise unter der Marke Joncryl R verkauft, wie etwa Joncryl R SCX 912 und 922.5.

Geeignete Polyester- und/oder Alkydharze werden z.B. in Ullmanns Encyklopädie der technischen Chemie, dritte Auflage, 14. Band, Urban & Schwarzenberg, München, Berlin 1863, Seiten 80 bis 89 und Seiten 99 bis 105, oder in den Büchern: Résines Alkydes-Polyesters von J. Bourry, Paris Verlag Dunod 1952, Alkyd Resins von C.R. Martens, Reinhold Publishing Corporation, New York 1961 und Alkyd Resin Technology von T.C. Patton, Interscience Publishers 1962 beschrieben.

Beispiele für geeignete Polyurethanharze sind die in den Patentschriften EP-A-0 708 788, DE-A-44 01 544 oder DE-A-195 34 361 beschriebenen Harze.

Als weiteren wesentlichen Bestandteil enthalten die erfindungsgemäßen Beschichtungsmittel, Klebstoffe und Dichtungsmassen die Vernetzungsmittel (B).

Hierbei ist es möglich, die erfindungsgemäßen Beschichtungsmittel, Klebstoffe und Dichtungsmassen als Ein- oder auch als Mehrkomponentensysteme auszulegen. Derartige Systeme unterscheiden sich im wesentlichen durch die Art des eingesetzten Vernetzungsmittels. In beiden Fällen kommen alle Vernetzungsmittel in Betracht, welche mit den Hydroxylgruppen der Bindemittel (A) unter den Härtungsbedingungen reagieren. Nur muß im Falle der Mehrkomponentensysteme das hierfür geeignete Vernetzungsmittel wegen seiner hohen Reaktivität bis kurz vor seiner Anwendung getrennt von den übrigen Bestandteilen gelagert werden.

Beispiele geeigneter Vernetzungsmittel sind Aminoplastharze, beta-Hydroxyalkylamide, Siloxangruppen enthaltende Verbindungen oder Harze, Anhydridgruppen enthaltende Verbindungen oder Harze, Carboxylgruppen enthaltende Verbindungen oder Harze, blockierte und unblockierte Polyisocyanate oder Alkoxycarbonylaminotriazine, insbesondere aber blockierte Polyisocyanate oder Tris(alkoxycarbonylamino)triazine.

Sowohl in Ein- als auch Mehrkomponentensysteme können blockierte Polyisocyanate oder eine Mischung aus blockierten Polyisocyanaten zum Einsatz kommen.

Die einsetzbaren blockierten Polyisocyanate sind vorzugsweise so ausgebildet, daß sie sowohl mit einem Blockierungsmittel (Z1) als auch mit einem Blockierungsmittel (Z2) blockierte Isocyanatgruppen enthalten, wobei das Blockierungsmittel (Z1) ein Dialkylmalonat oder eine Mischung aus Dialkylmalonaten ist, das Blockierungsmittel (Z2) ein von (Z1) verschiedenes, aktive Methylengruppen enthaltendes Blockierungsmittel, ein Oxim oder eine Mischung aus diesen Blockierungsmitteln ist und das Äquivalentverhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Außerdem kommen Dimethylpyrazol und/oder substituierte Triazole als Blockierungsmittel in Betracht.

Ein Polyisocyanat oder eine Mischung aus Polyisocyanaten wird in an sich bekannter Art und Weise mit einer Mischung aus den Blockierungsmitteln (Z1) und (Z2) umgesetzt, wobei die Mischung aus den Blockierungsmitteln (Z1) und (Z2) die Blockierunqsmittel (Z1) und (Z2) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Das Polyisocyanat bzw. die Mischung aus Polyisocyanaten kann mit der Mischung aus den Blockierungsmitteln (Z1) und (Z2) so weit umgesetzt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern.

Es wurde gefunden, daß auch dann Mehrstoffmischungen, insbesondere Beschichtungsmittel, Klebstoffe und Dichtungsmassen, mit guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (Z1) und (Z2) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexandiol-1,6 oder hydroxylgruppenhaltige Homo- oder Copolymerisate eingesetzt.

Ein geeignetes blockiertes Polyisocyanat ist auch erhältlich, indem mit dem Blockierungsmittel (Z1) bzw. (Z2) blockierte Polyisocyanate in einem solchen Verhältnis gemischt werden, daß eine Mischung erhalten wird, in der das Äquivalent-Verhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8.0 : 2,0 und 6,0 : 4,0, besondere bevorzugt zwischen 7,5 : 2,5 und 6,5 : 3,5 liegt.

Prinzipiell können alle sogenannten Lackpolyisocyanate zur Herstellung der blockierten Polyisocyanate eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat (IPDI), Trimethylhexamethylendiisocyanat, Dicyclohexylmethandiisocyanat, 1,3-Bis-(2-isocyanatopropyl-2-)benzol (TMXDI) und 1,4- und 1,3-Bis(isocyanatomethyl)cycloalkane wie 1,4- und 1,3-Bis(isocyanatomethyl) cyclohexan sowie Addukte dieser Polyisocyanate an Polyole, insbesondere niedermolekulare Polyole, wie z.B. Trimethylolpropan und von diesen Polyisocyanaten abgeleitete isocyanuratgruppen-und/oder biuretgruppenhaltige Polyisocyanate.

Als Polyisocyanate werden besonders bevorzugt Hexamethylendiisocyanat oder Isophorondiisocyanat, von diesen Diisocyanaten abgeleitete isocyanurat-, allophanat-, uretdion-, iminooxadiazindion- oder biuretgruppenhaltige Polyisocyanate, die vorzugsweise mehr als zwei Isocyanatgruppen im Molekül enthalten, sowie Umsetzungsprodukte aus Hexamethylendiisocyanat und Isophorondiisocyanat oder einer Mischung aus Hexamethylendüsocyanat und Isophorondiisocyanat mit 0,3 - 0.5 Aquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Als Blocklerungsmittel (Z1) werden Dialkylmalonate oder eine Mischung aus Dialkylmalonaten eingesetzt. Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylester, wobei Malonsäurediethylester bevorzugt eingesetzt wird. Als Blockierungsmittel (Z2) werden von (Z1) verschiedene, aktive Methylengruppen enthaltende Blokkierungsmittel und Oxime sowie Mischungen aus diesen Blockierungsmitteln eingesetzt. Als Beispiele für Blockierungsmittel, die als Blockierungsmittel (Z2) einsetzbar sind, werden genannt: Acetessigsäuremethyl-, ethyl-, -propyl-, butyl-, - pentyl-, hexyl -, heptyl-, octyl-, nonyl-, -decyl- oder -dodecylester, Acetonoxim, Methylethylketoxim, Acetylaceton, Formaldoxim, Acetaldoxim, Benzophenoxim, Acetoxim und Diisobutylketoxim. Als Blockierungsmittel (Z2) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (Z2) eingesetzt.

Als Vemetzer können auch Tris(alkoxycarbonylamino)triazine der Formel

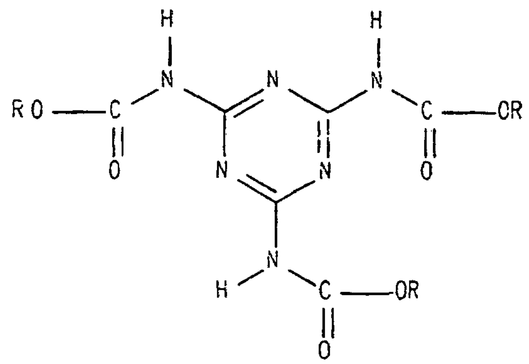

eingesetzt werden.

Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Ebenso sind Aminoplastharze, beispielsweise Melaminharze, verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP -B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Beispiele geeigneter beta-Hydroxyalkylamide sind N,N,N',N'-Tetrakis(2-hydroxyethyl)adipamid oder N,N,N',N'-Tetrakis(2-hydroxypropyl)adipamid.

Im Falle der Mehrkomponentensysteme, insbesondere der Zweikomponentensysteme, werden als Vernetzungsmittel mindestens ein gegebenfalls in einem oder mehreren organischen Lösungsmittel gelöstes nichtblockiertes oder teilblockiertes Polyisocyanat verwendet. Zusätzlich kann aber auch mindestens eines der vorstehend beschriebenen blockierten Polyisocyanate mit verwendet werden.

Bei den nichtblockierten Polyisocyanaten handelt es sich um beliebige organische Polyisocyanate, insbesondere Lackpolyisocyanate, mit aliphatisch, cycloaliphatisch, araliphatisch und/oder aromatisch gebundenen, freien Isocyanatgruppen. Es können auch die teilblockierten Polyisocyanate gemäß der deutschen Patentschrift DE-A-196 09

617 verwendet werden. Bevorzugt werden Polyisocyanate mit 2 bis 5 Isocyanatgruppen pro Molekül und mit Viskositäten von 100 bis 2000 mPa.s (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Polyisocyanates zu verbessern und gegebenenfalls die Viskosität des Polyisocyanats auf einen Wert innerhalb der obengenannten Bereiche abzusenken.

Geeignete Lösemittel für die Polyisocyanate sind beispielsweise Ethoxyethylpropionat, Butylacetat und ähnliches. Beispiele für geeignete Isocyanate werden in "Methoden der organischen Chemie", Houben-Weyl, Band 14/2, 4. Auflage, Georg Thieme Verlag. Stuttgart, 1963, Seiten 61 bis 70, und von W. Siefken, Liebigs Annalen der Chemie, Band 562, Seiten 75 bis 136, beschrieben.

Weitere Beispiele geeigneter Polyisocyanate sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Isocyanurat-, Biuret-, Allophanat-, Iminooxadiazindon-, Urethan-, Harnstoff- und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat oder Dicyclohexylmethan-4,4'-diisocyanat oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Desweiteren können die erfindungsgemäßen Beschichtungsmittel, Klebstoffe und Dichtungsmassen UV-Absorber; Radikalfänger; Katalysatoren für die Vernetzung, insbesondere metallorganische Verbindungen, vorzugsweise Zinn und/oder wismutorganische Verbindungen oder tertiäre Amine; Rheologiemittel, insbesondere die aus den Patentschriften WO 94/22968, EP-A-0 276 501, EP-A-0 249 201 oder WO 97/12945 bekannten; Pigmente und Füllstoffe jeglicher An, beispielsweise Farbpigmente wie Azopigmente, Phthalocyaninpigmente, Carbonylpigmente, Dioxazinpigmente, Titandioxid, Farbruß, Eisenoxide oder Chrom- bzw. Kobaltoxide, Effektpigmente wie Metallplättchenpigmente, insbesondere Aluminiumplättchenpigmente, und Perlglanzpigmente oder Füllstoffe wie Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl; Slipadditive; Polymerisationsinhibitoren; Entschäumer; Verlaufsmittel oder filmbildende Hilfsmittel, z.B. Cellulose-Derivate; oder andere in Beschichtungsmitteln, Klebstoffen oder Dichtungsmassen üblicherweise eingesetzten Additive enthalten.

Diese Additive werden üblicherweise in einer Menge von bis zu 15 Gew.-%, bevorzugt 2 bis 9 Gew.-%, bezogen auf das Gewicht der jeweiligen erfindungsgemäßen Beschichtungsmittel, Klebstoffe und Dichtungsmassen ohne Pigmente und ohne Füllstoffe, verwendet.

Erfindungsgemäß ist es von Vorteil, daß insbesondere das erfindungsgemäße Beschichtungsmittel so ausgewählt wird, daß das ausgehärtete Beschichtungsmittel, d.h. die erfindungsgemäße Beschichtung, im gummielastischen Bereich einen Speichermodul E' von mindestens $10^{7,6}$ Pa, bevorzugt von mindestens $10^{8,0}$ Pa, besonders bevorzugt von mindestens $10^{8,3}$ Pa, und einen Verlustfaktor bei 20 °C von maximal 0,10, bevorzugt von maximal 0,06, aufweist, wobei das Speichermodul E' und der Verlustfaktor $\tan\delta$ mit der Dynamisch-Mechanischen Thermo-Analyse an homogenen freien Filmen mit einer Schichtdicke von $40 \pm 10$ µm gemessen worden sind. Der Verlustfaktor $\tan\delta$ ist dabei definiert ist als der Quotient aus dem Verlustmodul E" und dem Speichermodul E'.

Die Dynamisch-Mechanische Thermo-Analyse ist eine allgemein bekannte Meßmethode zur Bestimmung der viskoelastischen Eigenschaften von Beschichtungen und beispielsweise beschrieben in Murayama, T., Dynamic Mechanical Analysis of Polymeric Material, Elsevier, New York, 1978 und Loren W.

Hill, Journal of Coatings Technology, Vol. 64, No. 808, May 1992. Seiten 31 bis 33.

Die Durchführung der Messungen kann beispielsweise mit den Geräten MK II, MK III oder MK IV der Firma Rheometrics Scientific erfolgen.

Der Speichermodul E' und der Verlustfaktor $\tan\delta$ werden an homogenen freien Filmen gemessen. Die freien Filme werden in bekannter Weise dadurch hergestellt, daß das erfindungsgemäße Beschichtungsmittel auf Substrate appliziert und gehärtet wird, auf denen das Beschichtungsmittel nicht haftet. Als Beispiele für geeignete Substrate seien Glas, Teflon und insbesondere Polypropylen genannt. Polypropylen weist dabei den Vorteil einer guten Verfügbarkeit auf und wird daher normalerweise als Trägermaterial eingesetzt.

Die Schichtdicke der zur Messung eingesetzten freien Filme beträgt dabei im allgemeinen $40 \pm 10$ µm.

Die spezielle Auswahl der erfindungsgemäßen Beschichtungsmittel über den Wert des Speichermoduls im gummielastischen Bereich und des Verlustfaktors bei 20 °C der ausgehärteten Beschichtungsmittel ermöglicht dabei

in einfacher Weise die Bereitstellung von Beschichtungsmitteln mit dem gewünschten Eigenschaftsprofil einer guten Kratzfestigkeit bei gleichzeitig guter Polierbarkeit, Chemikalien- und Feuchteresistenz sowie Witterungsbeständigkeit, da beide Kenngrößen durch einfache DMTA-Messungen bestimmbar sind. Ferner weisen die resultierenden erfindungsgemäßen Beschichtungen einen hohen Glanz und eine Säure- und Basebeständigkeit auf, die vergleichbar ist zu den entsprechenden Werten herkömmlicher, thermisch gehärteter Lacke.

Die erfindungsgemäßen Beschichtungsmittel, Klebstoffe und Dichtungsmassen können in Form von Folien, Pulvern, wäßrigen Pulverslurries, lösemittelfreien Flüssigkeiten oder Schmelzen, als Lösung oder Dispersion in wäßrigen Medien oder auf konventioneller Basis, d. h. als Lösung in organischen Lösemitteln, wie sie auf dem Gebiet der Beschichtungsmittel, Klebstoffe und Dichtungsmassen üblich und bekannt sind, vorliegen und angewandt werden. Die Eigenschaften, welche die Bestandteile der erfindungsgemäßen Beschichtungsmittel, Klebstoffe und Dichtungsmassen aufweisen müssen, um für die jeweilige Anwendungs- und Applikationsform geeignet zu sein, sind dem Fachmann geläufig. So wird er beispielsweise für die Herstellung von Pulvern feste, von lösemittelfreien Flüssigkeiten flüssige, von wäßrigen Lösungen oder Dispersionen wasserlösliche oder wasserdispergierbare oder für Lösungen in organischen Lösemitteln entsprechend lösliche erfindungsgemäß zu verwendende Bindemittel (A) verwenden.

Die Herstellung der erfindungsgemäßen Beschichtungsmittel, Klebstoffe und Dichtungsmassen weist keine verfahrenstechnischen Besonderheiten auf, sondern es werden die üblichen Methoden wie das Zusammengeben der einzelnen Bestandteile und ihr Vermischen unter Rühren angewandt. Die Herstellung der aus zwei oder mehr Komponenten bestehenden erfindungsgemäßen Mehrstoffmischungen erfolgt ebenfalls mittels Rühren bzw. Dispersion unter Verwendung der üblicherweise eingesetzten Vorrichtungen, beispielsweise mittels Dissolver oder mittels üblicher Zwei- oder Mehrkomponenten-Dosier- und - mischanlagen. Die einzelnen Komponenten werden bis zu ihrer bestimmungsgemäßen Verwendung getrennt gelagert.

Das erfindungsgemäßen Beschichtungsmittel wird vor allem zur Herstellung von beschichteten Formteilen, Verbundteilen oder komplexen Bauteilen, insbesondere Fahrzeugkarosserien, welche Folien, Glas, Holz, Papier und/ oder Metall enthalten oder hieraus bestehen, durch Auftragen des Beschichtungsmittels, beispielsweise durch Coil Coating, auf den entsprechenden Formteilen, Verbundteilen oder komplexen Bauteilen und Aushärten der resultierenden Beschichtung verwendet.

Das erfindungsgemäße Beschichtungsmittel wird vorzugsweise zur Herstellung von Ein- oder Mehrschichtlackierungen und besonders bevorzugt zur Herstellung von Decklacken eingesetzt. Es kann aber auch zur Herstellung eines über einer Basislackschicht zu applizierenden Klarlacks, beispielsweise eines Klarlacks einer nach dem naß-in-naß-Verfahren hergestellten Mehrschichtlackierung, bestimmt sein. Darüber hinaus kann es auch als Grundierung, Füller oder Unterbodenschutz verwendet werden. Selbstverständlich können die Kunststoffe oder die anderen Substrate auch direkt mit dem Klarlack oder dem Decklack beschichtet werden.

Die erfindungsgemäßen Beschichtungsmittel können sowohl bei der Serien- als auch bei der Reparaturlakkierung von Fahrzeugkarosserien, insbesondere Automobilkarosserien, inklusive Kunststoffanbauteilen, eingesetzt werden.

Der erfindungsgemäße Klebstoff dient zur Herstellung von verklebten Verbundteilen, welche Folien, Kunststoffe, Glas, Holz, Papier und/oder Metall enthalten oder hieraus bestehen, indem der Klebstoff auf der oder den zu verklebenden Oberfläche(n) einer Folie oder eines Kunststoff, Glas, Holz, Papier und/oder Metall enthaltenden oder heraus bestehenden Formteils und/oder der oder den Oberfläche(n) des Teils, der hiermit verklebt werden soll, aufgetragen und gegebenenfalls vorgehärtet wird, wonach die betreffenden zu verklebenden Oberflächen in Kontakt gebracht werden und hiernach der Klebstoff ausgehärtet wird.

Die Applikation des erfindungsgemäßen Beschichtungsmittels und des erfindungsgemäßen Klebstoffs erfolgt im allgemeinen mit Hilfe üblicher Methoden, beispielsweise durch Spritzen, Rakeln, Tauchen oder Streichen.

Die erfindungsgemäße Dichtungsmasse dient der hermetischen Abdichtung der Fugen in Verbundteilen und komplexen Bauteilen, insbesondere Fahrzeugkarosserien, welche aus unterschiedlichen Formteilen und Verbundteilen zusammengesetzt sind. Zu diesem Zweck wird die erfindungsgemäße Dichtungsmasse in die Fugen eingebracht, etwa durch Spritzen oder Gießen, und gegebenenfalls mit den ebenfalls verwendeten Beschichtungsmitteln und/oder Klebstoffen thermisch gehärtet.

Die erfindungsgemäßen Beschichtungsmittel, Klebstoffe oder Dichtungsmassen werden vorzugsweise bei Temperaturen von Raumtemperatur bis zu 240 °C gehärtet. Besonders bevorzugt sind Temperaturen zwischen 60 und 180 °C. In speziellen Anwendungsformen der erfindungsgemäßen Beschichtungsmittel können auch tiefere Härtungstemperaturen von 60 bis 160 °C angewendet werden.

Formteile, Verbundteile und komplexe Bauteile, welche Folien, Kunststoffe, Glas, Holz, Papier und/oder Metall enthalten oder hieraus bestehen und mindestens eine Schicht des ausgehärteten Bindemittels, mindestens eine Schicht des ausgehärteten Klebstoffs und/oder mindestens eine mit einer ausgehärteten erfindungsgemäßen Dichtungsmasse abgedichtete Fuge enthalten, weisen gegenüber herkömmlichen Form-, Verbund- und Bauteilen hinsichtlich der Thermostabilität, Lichtbeständigkeit, Kratzfestigkeit und Wetterbeständigkeit deutliche Vorteile auf, so daß insgesamt eine längeren Lebensdauer resultiert.

## Beispiele

### Herstellbeispiel 1

### Die Herstellung eines erfindungsgemäß zu verwendenden Polyacrylats (A)

In einen Laborreaktor mit einem Nutzvolumen von 4 1, ausgestattet mit einem Rührer, zwei Tropftrichtem für den Monomerenzulauf und den Initiatorzulauf, Stickstoff-Einleitungrsohr, Thermometer und Rückflußkühler wurden 757,2 g Solventnaphtha eingewogen und auf 140 °C aufgeheizt. Innerhalb von vier Stunden wurde der Initiatorzulauf, bestehend aus 78,9 g Solventnaphtha und 38,1 g tert.-Butylperoxi-2-ethylhexanoat, gleichmäßig zudosiert. Innerhalb von 3,5 Stunden wurde der Monomerzulauf, bestehend aus 888,6 g Ethylhexylacrylat, 258 g Hydroxyethylmethacrylat, 573,3 g Methylpropan-1,3-diol-monoacrylat und 191,1 g Styrol, gleichmäßig zudosiert. Der Monomerzulauf wurde 15 Minuten nach den Initiatorzulauf gestartet. Während der Copolymerisation wurde die Temperatur bei 140 °C gehalten. Nach der Zugabe wurde noch zwei Stunden bei 140 °C nachpolymerisiert. Die resultierende Polyacrylatlösung hatte einen Festkörpergehalt von 70%. Anschließend wurde die Temperatur der Lösung auf 120 °C gesenkt, und ihr Festkörpergehalt wurde mit 214,8 g Solventnaphtha auf 65% eingestellt. Die Viskosität (original) lag bei 25,2 dPas.
Das resultierende erfindungsgemäß zu verwendende Polyacrylatharz wies eine (theoretische) Hydroxylzahl von 175 mg KOH/g, ein zahlenmittleres Molekulargewicht Mn von 3973, ein gewichtsmittleresMolekulargewichts Mw von 13600 und einer Uneinheitlichkeit Mw/Mn von 3,42 auf.

### Herstellbeispiel 2

### Herstellung eines herkömmlichen Polyacrylatharzes (Vergleichsversuch)

Das Herstellbeispiel 1 wurde wiederholt, nur daß als Vorlage 758,4 g Solventnaphtha, als Initiatorzulauf 77,4 g Solventnaphtha und 37,8 g tert.-Butylperoxi-2ethylhexanoat und als Monomerzulauf 889,5 g Ethylhexylacrylat, 258 g Hydroxyethylmethacrylat, 573,9 g 4- Hydroxybutylacrylat und 190,5 g Styrol verwendet wurden.
Die resultierende Polyacrylatharzlösung wies einen Festkörpergehalt von 63,7 % und eine Viskosität (original) von 16,8 dPas auf.
Das resultierende Polyacrylatharz wies ein zahlenmittleres Molekulargewicht Mn von 3908,ein gewichtsmittleres Molekulargewicht Mw von 10170 und eine Uneinheitlichkeit Mw/Mn von 2,6 auf.

### Beispiel und Vergleichsversuch

### Herstellung eines erfindungsgemäßen (Beispiel) und eines nicht erfindungsgemäßen (Vergleichsversuch) Beschichtungsmittels in Form von Zweikomponenten-Klarlacken

Jeweils 77,5 Gewichtsteile der vorstehend beschriebenen Polyacrylatharzlösungen (65 % Festkörpergehalt; eine Stunde bei 130°C), 6,5 Gewichtsteile Butylacetat, 2 Gewichtsteile Xylol, 4 Gewichtsteile Butylglykolacetat, 4,5 Gewichtsteile Glykolesäurebutylester und 0,004 Gewichtsteile Dibutylzinndilaurat wurde mit 53 Gewichtsteilen DesmodurR Z4470 (handelsübliches IPDI — Trimer der Firma Bayer AG) vermischt und mit Butylacetat auf eine Viskosität von 30 Sekunden im DIN 4 - Becher eingestellt.
Sowohl das resultierende erfindungsgemäße Beschichtungsmittel als auch das nicht erfindungsgemäße wurden auf Prüftafeln, welche eine Elektrotauchlackierung mit einer Schichtdicke von 18 - 22 µm, einen Füller mit einer Schichtdicke von 35 - 40 µm und einen schwarzen Basislack mit einer Schichtdicke von 12 - 15 µm übereinander liegend aufwiesen, als Klarlacke mit einer Schichtdicke von 40 - 45 µm appliziert und bei 80 °C vernetzt . Die Tafeln wurden nach der Applikation mindestens 2 Wochen bei Raumtemperatur gelagert. Anschließend wurden die Kratzfestigkeit und die chemische Resistenz der erfindungsgemäßen und der nicht erfindungsgemäßen Beschichtung ermittelt.

### Die Kratzfestigkeit nach dem Bürstentest

Die Kratzfestigkeit des erfindungsgemäßen Klarlacks auf den erfindungsgemäßen Prüftafeln und des nicht erfindungsgemäßen Klarlacks auf den nicht erfindungsgemäßen Prüftafeln wurde mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:
Bei dem Test wurde die Lackoberfläche mit einem Siebgewebe, welches mit einer Masse belastet wurde,

geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrugt 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült und die Prüftafel mit Druckluft trockengeblasen. Gemessen wurde der Glanz (20°) nach DIN 67530 vor und nach Beschädigung (Meßrichtung senkrecht zur Kratzrichtung).

Im Bürstentest wiesen die Klarlacke eine vergleichbar hohe Kratzfestigkeit auf, was sich an dem geringen Abfall ihres Glanzes (dGlanz) nach Belastung bemerkbar machte.

**Die Chemikalienbeständigkeit nach dem BART-Test**

Der BART (BASF ACID RESISTANCE TEST) diente der Ermittlung der Beständigkeit von Lackoberflächen gegen Säuren, Laugen und Wassertropfen. Dabei wurde die Beschichtung auf einem Gradientenofen nach der Einbrennung weiteren Temperaturbelastungen ausgesetzt (30 min 40°C, 50°C, 60°C und 70°C). Zuvor wurden die Testsubstanzen (Schwefelsäure 1%ig, 10%ig, 36%ig; schweflige Säure 6%ig; Salzsäure 10%ig; Natronlauge 5%ig; VE ( = vollentsalztes) Wasser - je 1,2,3 bzw. 4 Tropfen) definiert mit einer Dosierpipette aufgebracht. Im Anschluß an die Einwirkung der Substanzen wurden diese unter fließendem Wasser entfernt und die Beschädigungen nach 24 h entsprechend einer vorgegebenen Skala visuell beurteilt:

| Benotung | Aussehen |
|---|---|
| 0 | kein Defekt |
| 1 | leichte Markierung |
| 2 | Markierung / Vermattung / keine Erweichung |
| 3 | Markierung / Vermattung / Farbtonveränderung /Erweichung |
| 4 | Risse / beginnende Durchätzung |
| 5 | Klarlack entfernt |

Es wurde jede einzelne Markierung (Spot) ausgewertet und das Ergebnis in geeigneter Form (z.B. Notensummen für eine Temperatur) festgehalten. Die Tabelle gibt eine Übersicht über die erhaltenen Ergebnisse.

Tabelle:

| **Die Ergebnisse des BART-Tests** | | | | | | | | |
|---|---|---|---|---|---|---|---|---|
| | **Beispiel** | | | | **Vergleichsversuch** | | | |
| **Temperatur (°C)** | **50** | **60** | **70** | **80** | **50** | **60** | **70** | **80** |
| $H_2SO_4$ 1%ig | 0 | 1 | 1 | 1 | 0 | 0,5 | 1,5 | 2,5 |
| $H_2SO_4$ 10%ig | 0 | 0 | 1 | 1,5 | 0 | 0 | 1 | 2 |
| $H_2SO_4$ 36%ig | 0 | 0 | 1 | 2 | 1 | 1 | 1,5 | 3 |
| HCl 10%ig | 0 | 1 | 1 | 1,5 | 0 | 0,5 | 1 | 2 |
| $H_2SO_3$ 5%ig | 0 | 0 | 1 | 2 | 0 | 0,5 | 1,5 | 2 |
| NaOH 5%ig | 0 | 0 | 0 | 1 | 0 | 0 | 1 | 4,5 |
| VE-Wasser 1 | 0 | 0 | 0,5 | 1 | 0 | 0,5 | 1 | 1 |
| VE-Wasser 2 | 0 | 0 | 0,5 | 1 | 0 | 0,5 | 1,5 | 1 |
| VE-Wasser 3 | 0 | 0 | 0 | 0,5 | 0 | 0,5 | 1,5 | 1 |
| VE-Wasser 4 | 0 | 0 | 0 | 0,5 | 1 | 0,5 | 1,5 | 1 |

Tabelle: (fortgesetzt)

| Die Ergebnisse des BART-Tests | | | | | | | | |
|---|---|---|---|---|---|---|---|---|
| | **Beispiel** | | | | **Vergleichsversuch** | | | |
| **Temperatur (°C)** | **50** | **60** | **70** | **80** | **50** | **60** | **70** | **80** |
| **Summe Wasser** | **0** | **0,5** | **1,0** | **3** | **1** | **2** | **5,5** | **4** |
| **Summe Säure** | **0** | **2** | **5** | **10** | **1** | **2,5** | **7,5** | **16** |

Die Ergebnisse der Tabelle belegen die hervorragende Chemikalienbeständigkeit des erfindungsgemäßen Klarlack bei gleichzeitig hoher Kratzfestigkeit.

**Säuretest auf dem Gradientenofen**

Die Säurebeständigkeit des erfindungsgemäßen Klarlacks wurde noch untermauert durch den Säuretest auf dem Gradientenofen. Bei diesem Test wurde 1 %ige Schwefelsäure angewandt. Während der erfindungsgemäß Klarlack erst bei 52°C angeätzt wurde, wurde der nicht erfindungsgemäße Klarlack bereits bei 38 °C geschädigt.

**Fischerscope-Härte**

Die Mikroeindringhärte des erfindungsgemäßen und nicht erfindungsgemäßen Klarlacks wurde am Fischerscope zu 160 bzw. 126 bestimmt, was die überlegene Härte und Kratzfestigkeit des erfindungsgemäßen Klarlacks belegt.

**Patentansprüche**

**1.** Verwendung von Methylpropan-1,3-diol-mono(meth)acrylat zur Herstellung von oxidativ und/oder thermisch härtbaren Beschichtungsmitteln, Klebstoffen und Dichtungsmassen **dadurch gekennzeichnet, daß** die Beschichtungsmittel, Klebstoffe und Dichtungsmassen

A) mindestens ein Homopolymerisat von Methylpropan-1,3-diol-mono(meth)acrylat und/oder ein Copolymerisat von Methylpropan-1,3-diol-mono(meth)acrylat mit mindestens einem weiteren hiermit copolymerisierbaren Monomeren als Bindemittel und

B) mindestens ein Vernetzungsmittel, welches mit Hydroxylgruppen reaktive funktionelle Gruppen aufweist,

enthalten.

**2.** Die Verwendung nach Anspruch 1, **dadurch gekennzeichnet, daß** es sich bei den thermisch härtbaren Beschichtungsmitteln, Klebstoffen und Dichtungsmassen um Ein- oder Mehrkomponentensysteme, insbesondere Zweikomponentensysteme, handelt.

**3.** Die Verwendung nach Anspruch 1 oder 2, **dadurch gekennzeichnet, daß** es sich bei den Beschichtungsmitteln um pigmentierte und unpigmentierte Möbellacke, Lacke für die industrielle Lackierung, Automobilserienlacke und Autoreparaturlacke handelt.

**4.** Oxidativ und/oder thermisch härtbare Beschichtungsmittel, Klebstoffe und Dichtungsmassen, welche mindestens ein Homopolymerisat (A) von Methylpropan-1,3-diol-mono(meth)acrylat und/oder ein Copolymerisat (A) von Methylpropan-1,3-diol-mono(meth)acrylat mit mindestens einem weiteren hiermit copolymerisierbaren Monomeren enthalten.

**5.** Die Beschichtungsmittel, Klebstoffe und Dichtungsmassen nach Anspruch 4, **dadurch gekennzeichnet, daß** sie das Homo- und/oder Copolymerisat (A) als Bindemittel enthalten..

**6.** Die Beschichtungsmittel, Klebstoffe und Dichtungsmassen nach Anspruch 4 oder 5, **dadurch gekennzeichnet, daß** es sich um Ein- oder Mehrkomponentensysteme, insbesondere Zweikomponentensysteme, handelt:

**7.** Die Beschichtungsmittel, Klebstoffe und Dichtungsmassen nach einem der Ansprüche 4 bis 6, **dadurch gekennzeichnet, daß** sie mindestens ein Vernetzungsmittel (B), welches mit Hydroxylgruppen reaktive funktionelle Gruppen aufweist, enthalten.

**8.** Die Verwendung der Beschichtungsmittel, Klebstoffe und Dichtungsmassen gemäß einem der Ansprüche 4 bis 7 zur Herstellung pigmentierter und unpigmentierter Beschichtungen, Klebschichten und Dichtungen.

**9.** Die Verwendung nach Anspruch 8, **dadurch gekennzeichnet, daß** es sich bei den Beschichtungen um Möbellacke, industrielle Lackierungen, Automobitserientackierungen oder Autoreparaturlackierungen handelt.

**10.** Beschichtungen, Klebschichten und Dichtungen, herstellbar aus den Beschichtungsmitteln, Klebstoffen und Dichtungsmassen gemäß einem der Ansprüche 4 bis 7.

**11.** Verfahren zur Herstellung von Homo- oder Copolymerisaten von Methylpropan-1,3-diol-mono(meth)acrylat durch radikalische (Co)Polymerisation in einem flüssigen Reaktionsmedium, **dadurch gekennzeichnet, daß** man als Reaktionsmedium Reaktivverdünner für thermisch härtbare Beschichtungsmittel, Klebstoffe und Dichtungsmassen verwendet.

**12.** Verfahren zur Herstellung von Homo- oder Copolymerisaten von Methylpropan-1,3-diol-mono(meth)acrylat durch radikalische (Co)Polymerisation in einem flüssigen Reaktionsmedium, **dadurch gekennzeichnet, daß** es in einem Taylorreaktor mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert, durchgeführt wird.

**13.** Das Verfahren nach Anspruch 12, **dadurch gekennzeichnet, daß** man als Reaktionsmedium Reaktiwerdünner für thermisch härtbare Beschichtungsmittel, Klebstoffe und Dichtungsmassen verwendet.

## Claims

**1.** Use of methylpropane-1,3-diol mono(meth)-acrylate to prepare oxidatively and/or thermally curable coating compositions, adhesives, and sealing compounds **characterized in that** the coating compositions, adhesives, and sealing compounds comprise

A) at least one homopolymer of methylpropane-1,3-diol mono(meth)acrylate and/or a copolymer of methylpropane-1,3-diol mono(meth)acrylate with at least one further monomer copolymerizable therewith, as binder, and
B) at least one crosslinking agent containing functional groups that are reactive with hydroxyl groups.

**2.** The use according to Claim 1, **characterized in that** said thermally curable coating compositions, adhesives, and sealing compounds comprise one-component or multicomponent systems, especially two-component systems.

**3.** The use according to Claim 1 or 2, **characterized in that** the coating compositions comprise pigmented and unpigmented furniture coatings, industrial coatings, automotive OEM finishes and automotive refinishes.

**4.** Oxidatively and/or thermally curable coating compositions, adhesives, and sealing compounds which comprise at least one homopolymer (A) of methylpropane-1,3-diol mono(meth)acrylate and/or a copolymer (A) of methylpropane-1,3-diol mono(meth)acrylate with at least one further monomer copolymerizable therewith.

**5.** The coating compositions, adhesives, and sealing compounds according to Claim 4, comprising the homopolymer and/or copolymer (A) as binder.

6. The coating compositions, adhesives, and sealing compounds according to Claim 4 or 5, comprising one-component or multicomponent systems, especially two-component systems.

7. The coating compositions, adhesives, and sealing compounds according to one of Claims 4 to 6, comprising at least one crosslinking agent (B) containing functional groups that are reactive with hydroxyl groups.

8. The use of the coating compositions, adhesives, and sealing compounds according to one of Claims 4 to 7, to produce pigmented and unpigmented coatings, adhesive films, and seals.

9. The use according to Claim 8, **characterized in that** said coatings comprise furniture coatings, industrial coatings, automotive OEM finishes or automotive refinishes.

10. Coatings, adhesive films, and seals preparable from the coating compositions, adhesives, and sealing compounds according to one of Claims 4 to 7.

11. Process for preparing homopolymers or copolymers of methylpropane-1,3-diol mono(meth)acrylate by free-radical (co)polymerization in a liquid reaction medium, **characterized in that** reactive diluents for thermally curable coating compositions, adhesives, and sealing compounds are used as the reaction medium.

12. Process for preparing homopolymers or copolymers of methylpropane-1,3-diol mono(meth)acrylate by free-radical (co)polymerization in a liquid reaction medium, **characterized in that** said process is conducted in a Taylor reactor having an external reactor wall located within which there is a concentrically or eccentrically disposed rotor, a reactor floor, and a reactor lid, which together define the annular reactor volume, at least one means for metered addition of reactants, and a means for the discharge of product, where the reactor wall and/or the rotor are or is geometrically designed in such a way that the conditions for Taylor flow are met over substantially the entire reactor length in the reactor volume, i.e., in such a way that the annular gap broadens in the direction of flow traversal.

13. The process according to Claim 12, **characterized in that** reactive diluents for thermally curable coating compositions, adhesives, and sealing compounds are used as the reaction medium.

## Revendications

1. Utilisation de mono(méth)acrylate de méthylpropan-1,3-diol pour la fabrication de produits de revêtement, adhésifs et pâtes d'obturation durcissables par oxydation et/ou thermodurcissables, **caractérisée en ce que** ces produits de revêtement, adhésifs et pâtes d'obturation contiennent :

   A) au moins un homopolymérisat de mono(méth)acrylate de méthylpropan-1,3-diol et/ou un copolymérisat de mono(méth)acrylate de méthylpropan-1,3-diol avec au moins un autre monomère copolymérisable avec ce dernier, jouant le rôle de liant, et
   B) au moins un agent de réticulation qui comporte des groupes fonctionnels réactifs avec les groupes hydroxyle.

2. Utilisation selon la revendication 1, **caractérisée en ce que** les produits de revêtement, adhésifs et pâtes d'obturation thermodurcissables sont des systèmes mono-ou multi-composants, en particulier des systèmes bi-composants.

3. Utilisation selon la revendication 1 ou 2, **caractérisée en ce que** les produits de revêtement sont des vernis pour meubles pigmentés et non pigmentés, des peintures pour la peinture industrielle, des peintures de série pour automobiles et des peintures de réparation pour automobiles.

4. Produits de revêtement, adhésifs et pâtes d'obturation, durcissables par oxydation et/ou thermodurcissables, qui contiennent au moins un homopolymérisat (A) de mono(méth)acrylate de méthylpropan-1,3-diol et/ou un copolymérisat (A) de mono(méth)acrylate de méthylpropan-1,3-diol avec au moins un autre monomère copolymérisable avec ce dernier.

5. Produits de revêtement, adhésifs et pâtes d'obturation selon la revendication 4, **caractérisés en ce qu'**ils contiennent, comme liant(s), l'homo- et/ou le copolymérisat (A).

6. Produits de revêtement, adhésifs et pâtes d'obturation selon la revendication 4 ou 5, **caractérisés en ce qu'**il s'agit de systèmes mono- ou multi-composants, en particulier de systèmes bi-composants.

7. Produits de revêtement, adhésifs et pâtes d'obturation selon l'une quelconque des revendications 4 à 6, **caractérisés en ce qu'**ils contiennent au moins un agent de réticulation (B) qui comporte des groupes fonctionnels réactifs avec les groupes hydroxyle.

8. Utilisation des produits de revêtement, adhésifs et pâtes d'obturation selon l'une quelconque des revendications 4 à 7, pour la fabrication de revêtements, couches adhésives et joints pigmenté(e)s et non pigmenté(e)s.

9. Utilisation selon la revendication 8, **caractérisée en ce que** les revêtements sont des vernis pour meubles, peintures industrielles, peintures de série pour automobiles, ou peintures de réparation pour automobiles.

10. Revêtements, couches adhésives et joints, réalisables au moyen des produits de revêtement, adhésifs et pâtes d'obturation selon l'une quelconque des revendications 4 à 7.

11. Procédé pour la fabrication d'homo- ou copolymérisats de mono(méth)acrylate de méthylpropan-1,3-diol par (co) polymérisation radicalaire dans un milieu de réaction liquide, **caractérisé en ce que** l'on utilise, comme milieu de réaction, un diluant réactif pour produits de revêtement, adhésifs et pâtes d'obturation thermodurcissables.

12. Procédé pour la fabrication d'homo- ou copolymérisats de mono(méth)acrylate de méthylpropan-1,3-diol par (co) polymérisation radicalaire dans un milieu de réaction liquide, **caractérisé en ce qu'**il est mis en oeuvre dans un réacteur de Taylor comportant une paroi extérieure et un rotor disposé concentriquement ou excentriquement à l'intérieur, un fond de réacteur et un couvercle de réacteur, qui définissent ensemble le volume de réacteur en forme d'espace annulaire, au moins un dispositif pour l'introduction par doses de matières de départ ainsi qu'un dispositif pour la sortie du produit, la paroi du réacteur et/ou le rotor étant d'une conception géométrique telle que, sur essentiellement la longueur totale du réacteur dans le volume du réacteur, les conditions pour l'écoulement de Taylor se trouvent satisfaites, c'est-à-dire que l'espace annulaire s'élargisse dans la direction de l'écoulement.

13. Procédé selon la revendication 12, **caractérisé en ce que** l'on utilise, comme milieu de réaction, un diluant réactif pour produits de revêtement, adhésifs et pâtes d'obturation thermodurcissables.